# FASCICULE DE BREVET EUROPEEN

(11) **EP 3 137 330 B1**
(45) Date de publication et mention de la délivrance du brevet: **01.03.2023**
(21) Numéro de dépôt: 15718898.8
(22) Date de dépôt: 29.04.2015
(51) Int. Cl.: B60K 11/08

(54) **GUIDE D'AIR ET MODULE DE GUIDE D'AIR**
LUFTFÜHRUNG UND LUFTFÜHRUNGSMODUL
AIR GUIDE AND AIR GUIDE MODULE

(30) Priorité: 30.04.2014 FR 1453921
(43) Date de publication de la demande: 08.03.2017
(73) Titulaire: Valeo Systemes Thermiques, 78320 Le Mesnil Saint Denis (FR)
(72) Inventeur: VACCA, Frédéric, F-78910 Behoust (FR); LANARD, Jean-Louis, F-78810 Feucherolles (FR)
(74) Mandataire: Valeo Systèmes Thermiques
(86) Numéro de dépôt international: PCT/EP2015/059294
(87) Numéro de publication internationale: WO 2015/165939

(56) Documents cités:
- EP-A1- 2 591 930
- EP-A1- 2 983 934
- FR-A1- 2 553 826
- FR-A1- 2 737 159
- FR-A1- 2 965 226
- FR-A1- 2 971 743
- US-A1- 2006 102 109
- US-A1- 2007 068 716

## Description

L'invention concerne un guide d'air et un module de guide d'air.

Les faces avant de véhicules automobiles sont généralement composées d'une entrée d'air principale ou de deux entrées d'air, dites voie haute et voie basse, séparées par une poutre parechoc. Derrière cette poutre parechoc sont généralement placés les échangeurs de chaleur du véhicule automobile, comme par exemple celui utilisé pour la climatisation de l'habitacle.

Des canaux guides d'air permettant de canaliser l'air vers les échangeurs de chaleur, sont généralement utilisés pour améliorer leurs performances thermiques. Cependant, le raccordement entre les différents canaux guides d'air n'est pas toujours parfaitement étanche. En outre, le montage et l'étanchéité du montage nécessitent une main d'oeuvre importante.

Les documents FR2965226 A1 et US2007/068716 A1 sont particulièrement pertinents dans le présent contexte.

Un des buts de la présente invention est de proposer un guide d'air et un module guide d'air, moins coûteux à fabriquer et plus simple à assembler.

À cet effet, l'invention a pour objet un guide d'air pour véhicule automobile selon la revendication 1.

L'étanchéité est ainsi améliorée car il n'est plus nécessaire d'étanchéifier plusieurs pièces raccordées. La main d'oeuvre peut être réduite du fait de la réduction du nombre de pièces à assembler de manière étanche, ce qui permet de réduire les coûts de réalisation. Egalement, le démontage du guide d'air est facilité.

Le guide d'air peut encore avoir une ou plusieurs caractéristiques décrite ci-après, prise seule ou en combinaison.

Le au moins un conduit amont d'entrée d'air est par exemple réalisé en matériau flexible, tel qu'au moins partiellement en matériau élastomère. Le au moins un conduit amont d'entrée d'air est par exemple formé de matériau EPDM, SEBS, ou polypropylène PP chargé EPDM.

On peut prévoir que le conduit principal aval soit réalisé en matériau plus rigide que le au moins un conduit amont d'entrée d'air. Le conduit principal aval est par exemple réalisé en matériau polymère chargé, comme le PP GF30 ou polypropylène chargé verre. La structure du conduit principal aval nécessite d'être renforcée car elle participe à la tenue mécanique générale du guide d'air, tout en présentant une certaine souplesse permettant d'éviter la rupture en cas de choc et donc de diminuer les risques d'endommagements.

Le guide d'air est par exemple obtenu par bi-injection. La bi-injection permet d'injecter deux matières différentes dans un même outillage. Il est ainsi monobloc tout en étant composé de différents matériaux pour prévoir notamment un matériau plus souple pour le au moins un conduit amont d'entrée d'air. Selon une autre forme de réalisation, les conduits amont d'entrée d'air sont surmoulés au conduit principal aval.

Le au moins un conduit amont d'entrée d'air peut présenter une forme générale évasée vers l'avant, s'agrandissant du côté destiné à être raccordé à l'entrée d'air dudit véhicule automobile. La forme évasée du conduit amont d'entrée d'air participe également à la souplesse du guide d'air.

Le au moins un conduit amont d'entrée d'air s'étend dans une direction sensiblement perpendiculaire à un plan défini par une ouverture arrière du conduit principal aval destinée à être raccordée au dispositif d'échange thermique. La longueur sur laquelle s'étend le au moins un conduit amont d'entrée d'air définit une distance d'absorption sur laquelle le guide d'air peut se déformer pour absorber les chocs. Le au moins un conduit amont d'entrée d'air s'étend par exemple sur une distance d'absorption comprise entre 50 et 200 millimètres, telle que comprise entre 80 et 120 millimètres.

Grâce à sa forme spécifique et/ou du fait des propriétés du matériau, le au moins un conduit amont d'entrée d'air présente une certaine souplesse donnant au guide d'air la faculté de se déformer. Cette capacité de déformation permet au guide d'air d'absorber l'énergie de chocs basses vitesses pouvant survenir à l'avant du véhicule, tels que les chocs de parking, permettant notamment de limiter l'endommagement des composants du véhicule situés à l'arrière du guide d'air, tels que le dispositif d'échange thermique. Le guide d'air assure ainsi une fonction supplémentaire à celle de la canalisation de l'air en participant à l'absorption de chocs.

En outre, le au moins un conduit amont d'entrée d'air flexible permet d'absorber les tolérances de fabrication lors de l'assemblage du guide d'air dans le véhicule automobile. En effet, le rattrapage des jeux peut être réalisé sans contraintes, par une légère déformation du au moins un conduit amont d'entrée d'air. Les tolérances requises ne sont alors plus aussi faibles que celles exigées pour des canaux guides d'air de l'état de la technique qui devaient s'assembler en présentant un jeu minimal. Le guide d'air est ainsi plus facile à assembler et moins coûteux à fabriquer.

Selon un exemple de réalisation, le guide d'air comporte deux conduits amont d'entrée d'air superposés, destinés à être raccordés d'une part, à une entrée d'air respective du véhicule automobile et d'autre part, à le au moins un conduit principal aval pour guider l'air depuis l'entrée d'air vers le dispositif d'échange thermique en formant un logement transversal entre les conduits amont d'entrée d'air pour recevoir une poutre de protection du véhicule automobile.

Selon l'invention, le guide d'air comporte au moins un conduit supplémentaire d'amenée d'air destiné à être raccordé à une entrée d'air du véhicule automobile, pour guider l'air depuis l'entrée d'air vers un dispositif additionnel du véhicule automobile, tel qu'un projecteur ou un pulseur d'air additionnel. Ainsi, le flux d'air provenant de l'entrée d'air n'est pas uniquement dirigé vers le dispositif d'échange thermique mais peut également être utilisé pour le refroidissement d'autres dispositifs.

Selon l'invention, le conduit supplémentaire d'amenée d'air communique avec le conduit amont d'entrée d'air en amont d'un support de volets du guide d'air. On profite ainsi de la présence de volets pilotés, agencés entre les entrées d'air du véhicule et le dispositif d'échange thermique et permettant notamment d'accélérer la montée en température des échangeurs en phase de chauffage en diminuant la consommation du véhicule, pour également piloter l'orientation de tout ou partie du flux d'air, en fonction des besoins, selon l'inclinaison des volets, vers le(s) dispositif(s) additionnel(s).

Selon l'invention, le conduit supplémentaire d'amenée d'air est séparé du conduit amont d'entrée d'air. Le conduit supplémentaire d'amenée d'air guide ainsi un même flux d'air vers le dispositif additionnel indépendamment de l'inclinaison des volets.

Le guide d'air comporte par exemple deux conduits supplémentaires d'amenée d'air ménagés de part et d'autre d'un conduit amont d'entrée d'air, les conduits supplémentaires d'amenée d'air étant destinés à déboucher au niveau d'un projecteur respectif du véhicule automobile. Les récentes technologies employées pour les projecteurs nécessitent en effet leur refroidissement. La déviation du flux d'air des entrées d'air vers les projecteurs permet de refroidir ces derniers sans nécessiter l'utilisation de gros dissipateurs thermiques ou de pulseurs d'air additionnels.

Le guide d'air peut comporter au moins un support de volets configuré pour maintenir un panneau de volets.

Le guide d'air peut comporter un cadre porteur dans lequel est ménagé le conduit principal aval.

Le cadre porteur peut comporter un support d'échangeur configuré pour maintenir le dispositif d'échange thermique du véhicule automobile. Le guide d'air peut ainsi supporter les échangeurs thermiques et le système de ventilation.

Le cadre porteur peut comporter deux supports de projecteurs agencés latéralement de part et d'autre du au moins un conduit principal aval. Le guide d'air peut ainsi supporter les projecteurs.

L'invention a aussi pour objet un module de guide d'air comportant un guide d'air tel que décrit précédemment et au moins un panneau de volets monté dans le guide d'air. Le module de guide d'air permet de pré-assembler le panneau de volets au guide d'air avant qu'ils soient montés dans le véhicule automobile, ce qui facilite leur montage.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 représente une vue schématique de côté et en coupe verticale d'un guide d'air monté dans un véhicule automobile,
- la figure 2 représente une vue schématique et de face du guide d'air de la figure 1 et d'éléments du véhicule automobile,
- la figure 3 illustre un exemple de réalisation d'un module guide d'air vue de face,
- la figure 4 montre un autre exemple de réalisation d'un module guide d'air vue de trois-quarts face, et
- la figure 5 illustre encore un autre exemple de réalisation d'un module guide d'air.

Sur ces figures, les éléments sensiblement identiques portent les mêmes références.

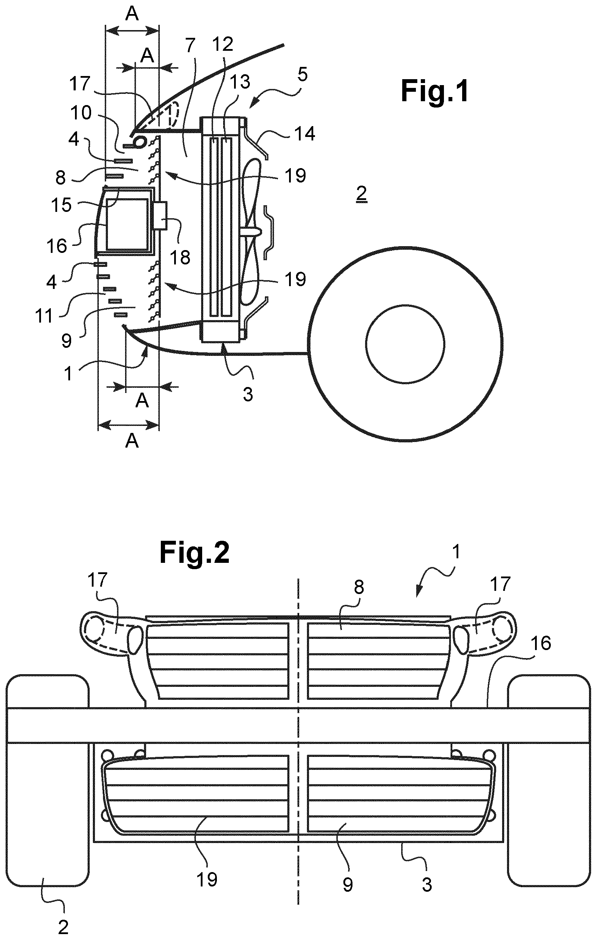

Les figures 1 et 2 illustrent un premier exemple de guide d'air 1.

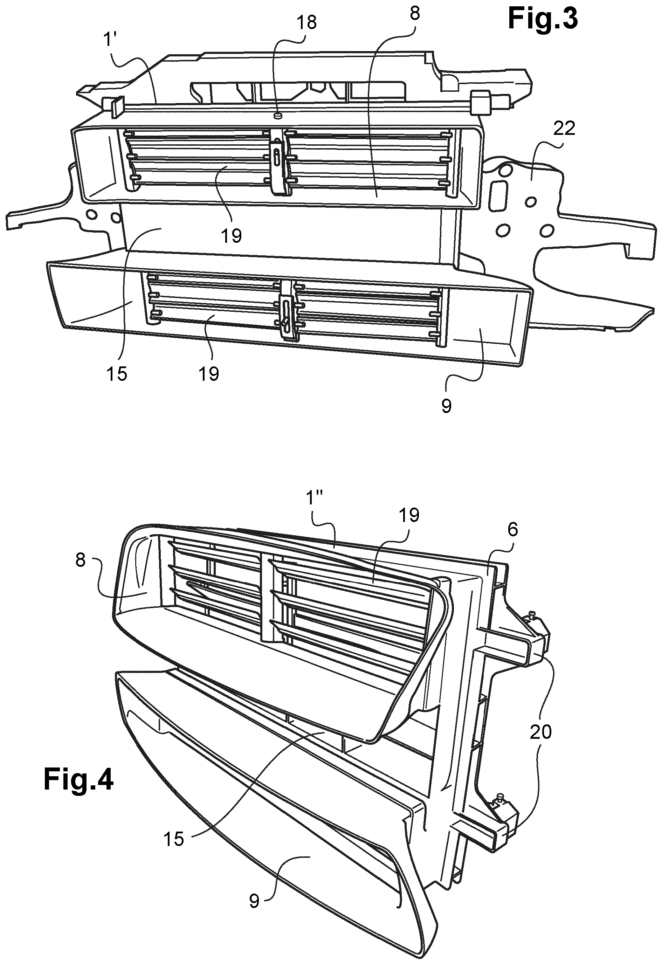

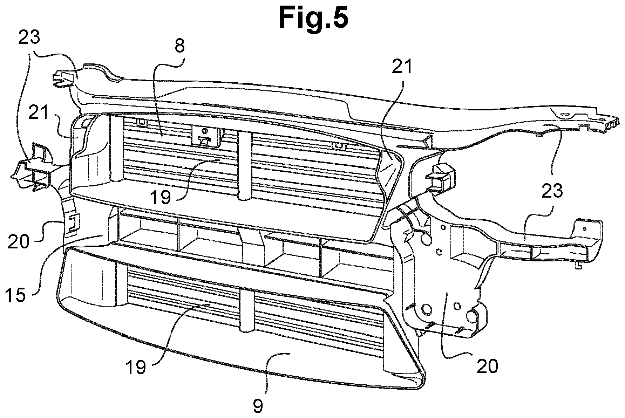

Le guide d'air 1 est monté à l'avant d'un véhicule automobile 2, entre une structure porteuse 3 de la face avant du véhicule (« carrier » ou « bolster » en anglais), généralement liée aux ailes et aux longerons du véhicule, et le bouclier du véhicule dans lequel est montée la calandre 4. Selon le type de véhicule, le guide d'air peut être alternativement monté sur une buse structurelle de la face avant, la buse structurelle supportant le dispositif d'échange thermique 5 du véhicule comme représenté en figure 3. Selon encore d'autres exemples de réalisation représentés sur les figures 4 et 5 et détaillés plus loin, le guide d'air comporte lui-même un cadre porteur 6 configuré pour maintenir le dispositif d'échange thermique 5.

En revenant à l'exemple de la figure 1, le guide d'air 1 comporte au moins un conduit principal aval 7 raccordé au dispositif d'échange thermique 5 du véhicule automobile 2, un conduit amont d'entrée d'air 8 agencé en partie supérieure et un conduit amont d'entrée d'air 9, agencé en partie inférieure.

Les conduits amont d'entrée d'air 8, 9 sont raccordés d'une part, à une entrée d'air 10, 11 respective du véhicule automobile 2. Les entrées d'air 10, 11, respectivement dites voie haute et voie basse, sont ménagées à l'avant du véhicule automobile 2, derrière des grilles de la calandre 4.

Les conduits amont d'entrée d'air 8, 9 sont raccordés d'autre part à un conduit principal aval 7 commun pour guider l'air depuis les entrées d'air 10, 11 vers le dispositif d'échange thermique 5. Selon un autre exemple non représenté, les conduits amont d'entrée d'air sont reliés à un conduit principal aval respectif, les flux d'air restant alors séparés depuis les entrées d'air jusqu'aux conduits principaux.

Le dispositif d'échange thermique 5 comporte au moins un échangeur thermique faisant face à une ouverture arrière du conduit principal aval 7. Le dispositif d'échange thermique 5 comporte par exemple un condenseur 12, un radiateur 13 et un système de ventilation 14.

Les conduits amont d'entrée d'air 8, 9 superposés, ici s'étendent en parallèle et sont raccordés au conduit principal aval 7 en formant un logement transversal 15 dans lequel est reçue une poutre de protection 16 du véhicule automobile 2.

Le guide d'air 1 comprenant le conduit principal aval 7 et les conduits amont d'entrée d'air 8, 9 est réalisé en une seule pièce. L'étanchéité est ainsi améliorée car il n'est pas nécessaire d'étanchéifier plusieurs pièces raccordées. La main d'oeuvre peut être réduite du fait de la réduction du nombre de pièces à assembler de manière étanche, ce qui permet de réduire les coûts de réalisation. Egalement, le démontage du guide d'air est facilité.

Selon un exemple de réalisation, le guide d'air 1 comporte au moins un conduit supplémentaire d'amenée d'air 17 raccordé à une entrée d'air 10 du véhicule automobile 2, pour guider l'air depuis l'entrée d'air 10 vers un dispositif additionnel du véhicule automobile 2, tel qu'un projecteur ou un pulseur d'air additionnel. Ainsi, le flux d'air provenant de l'entrée d'air 10 n'est pas uniquement dirigé vers le dispositif d'échange thermique 5 mais peut également être utilisé pour le refroidissement d'autres dispositifs.

Sur l'exemple de réalisation représenté en figure 1, le conduit supplémentaire d'amenée d'air 17 communique avec le conduit amont d'entrée d'air 8 en amont d'un panneau de volets 19.

Les volets sont par exemple formés de lamelles montées pivotantes transversalement sur le panneau 19. L'inclinaison des volets peut être pilotée entre une position verticale de fermeture bloquant le passage de l'air et plusieurs positions intermédiaires jusqu'à une position horizontale d'ouverture où un flux d'air maximum peut circuler.

Les volets pilotés sont par exemple agencés devant le dispositif d'échange thermique 5, ce qui permet notamment de les fermer pour accélérer la montée en température des échangeurs en phase de chauffage en diminuant la consommation du véhicule 2.

Le panneau de volets 19 peut être monté dans le guide d'air 1 au moyen d'un support de volets 18 du guide d'air 1.

Le support de volets 18 peut être agencé entre le conduit principal aval 7 et les conduits amont d'entrée d'air 8, 9 pour maintenir un panneau de volets 19 à l'arrière des conduits amont d'entrée d'air 8, 9 (figure 1).

Selon un autre exemple de réalisation, un panneau de volets 19 est monté dans chaque conduit amont d'entrée d'air 8, 9, ce qui améliore l'étanchéité.

Le panneau de volets 19 peut être monté au guide d'air 1 au préalable, pour former un module de guide d'air, plus facile à assembler dans le véhicule 2.

On profite ainsi de la présence de volets pilotés, agencés entre les conduits d'entrées d'air 10, 11 du véhicule 2 et le dispositif d'échange thermique 5 pour également piloter l'orientation de tout ou partie du flux d'air, en fonction des besoins, selon l'inclinaison des volets, vers le(s) dispositif(s) additionnel(s).

Comme on peut mieux le voir sur la figure 2, le guide d'air 1 comporte par exemple deux conduits supplémentaires d'amenée d'air 17 ménagés de part et d'autre du conduit amont d'entrée d'air 8 agencé en partie supérieure.

Les conduits supplémentaires d'amenée d'air 17 sont par exemple destinés à déboucher au niveau d'un projecteur (non représenté) respectif du véhicule automobile 2. Les récentes technologies employées pour les projecteurs nécessitent en effet leur refroidissement. La déviation du flux d'air des entrées d'air 10, 11 vers les projecteurs permet de refroidir ces derniers sans nécessiter l'utilisation de gros dissipateurs thermiques ou de pulseurs d'air additionnels.

On prévoit en outre que les conduits amont d'entrée d'air 8, 9 sont réalisés en matériau flexible, tel qu'au moins partiellement en matériau élastomère. Les conduits amont d'entrée d'air 8, 9 sont par exemple formés de matériau EPDM, SEBS, ou polypropylène PP chargé EPDM.

Les conduits amont d'entrée d'air 8, 9 s'étendent dans une direction sensiblement perpendiculaire à un plan défini par une ouverture arrière du conduit principal aval 7 raccordée au dispositif d'échange thermique 5, c'est-à-dire horizontalement une fois le guide d'air monté dans le véhicule automobile 2. La longueur sur laquelle s'étendent les conduits amont d'entrée d'air 8, 9 définit une distance d'absorption A sur laquelle le guide d'air 1 peut se déformer pour absorber les chocs. Les conduits amont d'entrée d'air 8, 9 s'étendent par exemple sur une distance d'absorption A comprise entre 50 et 200 millimètres, telle que comprise entre 80 et 120 millimètres (figure 1).

Grâce à leurs formes spécifiques et/ou du fait des propriétés de leur matériaux, les conduits amont d'entrée d'air 8, 9 présentent une certaine souplesse donnant au guide d'air la faculté de se déformer. Cette capacité de déformation permet au guide d'air d'absorber l'énergie de chocs basses vitesses pouvant survenir à l'avant du véhicule 2, tels que les chocs de parking, permettant notamment de limiter l'endommagement des composants du véhicule 2 situés à l'arrière du guide d'air, tels que le dispositif d'échange thermique 5. Le guide d'air assure ainsi une fonction supplémentaire à la canalisation de l'air en participant à l'absorption de chocs.

En outre, les conduits amont d'entrée d'air 8, 9 flexibles permettent d'absorber les tolérances de fabrication lors de l'assemblage du guide d'air dans le véhicule automobile 2. En effet, le rattrapage des jeux lors de l'accostage sur le bouclier peut être réalisé sans contraintes, par une légère déformation des conduits amont d'entrée d'air 8, 9. Les tolérances requises ne sont alors plus aussi faibles que celles exigées pour des canaux guides d'air de l'état de la technique qui devaient s'assembler en présentant un jeu minimal. Les guides d'air sont ainsi plus faciles à assembler et moins coûteux à fabriquer.

On se réfère maintenant à un deuxième exemple de réalisation d'un guide d'air représenté en figure 3.

Dans cet exemple, le guide d'air 1' est dépourvu de conduits supplémentaires d'amenée d'air. Il est par ailleurs monté sur une buse structurelle 22 de la face avant, supportant le dispositif d'échange thermique 5. Le panneau de volets 19 peut être monté dans la buse structurelle 22, à l'arrière du conduit principal aval 7 et des conduits amont d'entrée d'air 8, 9.

On distingue sur cet exemple que les conduits amont d'entrée d'air 8, 9 présentent une forme de manchon, c'est-à-dire une paroi fine annulaire dont l'extrémité forme sensiblement une lèvre.

Les conduits amont d'entrée d'air 8, 9 présentent en outre une forme générale évasée vers l'avant, s'agrandissant du côté destiné à être raccordé aux entrées d'air 10, 11 du véhicule automobile 2. Les formes en manchon et évasées des conduits amont d'entrée d'air 8, 9 participent également à la souplesse du guide d'air 1.

Sur un troisième exemple de réalisation représenté en figure 4, le guide d'air 1" comporte un cadre porteur 6 dans lequel est ménagé le conduit principal aval 7.

Le cadre porteur 6 est réalisé en matériau plus rigide que les conduits amont d'entrée d'air 8, 9. Le cadre porteur 6 est par exemple réalisé en matériau polymère chargé, comme le PP GF30 ou polypropylène chargé verre. La structure du cadre porteur 6 nécessite d'être renforcée car elle participe à la tenue mécanique générale du guide d'air, tout en présentant une certaine souplesse permettant d'éviter la rupture en cas de choc et donc de diminuer les risques d'endommagements.

Le cadre porteur 6 peut également comporter un support d'échangeur 20 comprenant des moyens de fixation coopérant avec le dispositif d'échange thermique 5, pour le maintenir. Selon un exemple de réalisation, le support d'échangeur 20 comporte des ailes de fixation percées, agencées de part et d'autre du conduit principal aval 7 et formées dans le matériau du cadre porteur 6. Les ailes de fixation sont destinées à coopérer avec le dispositif d'échange thermique 5 pour son maintien. Le guide d'air peut ainsi porter le dispositif d'échange thermique 5.

Le guide d'air est par exemple obtenu par bi-injection. Il est ainsi monobloc tout en étant composé de différents matériaux pour prévoir notamment un matériau plus souple pour les conduits amont d'entrée d'air 8, 9 et plus rigide pour le cadre porteur 6.

On a représenté un quatrième exemple de réalisation d'un module guide d'air sur la figure 5.

Comme dans le troisième mode de réalisation, le guide d'air 1‴ comporte un cadre porteur 6 muni d'un support d'échangeur 20 comportant des ailes de fixation percées, agencées de part et d'autre du conduit principal aval 7.

Le cadre porteur 6 comporte en outre deux supports de projecteurs 23 agencés latéralement de part et d'autre du au moins un conduit principal aval 7. Les supports de projecteurs 23 comportent par exemple deux pattes de support et de fixation, s'étendant sensiblement en parallèle et configurées pour maintenir et fixer un projecteur respectif du véhicule automobile 2. Les supports de projecteurs 23 s'étendent latéralement par exemple au-dessus des supports d'échangeur 20.

Le guide d'air comporte en outre deux conduits supplémentaires d'amenée d'air 21 destinés à être raccordés à l'entrée d'air 10 du véhicule automobile 2 agencée en partie supérieure. Les conduits supplémentaires d'amenée d'air 21 sont ménagés de part et d'autre du conduit amont d'entrée d'air 8, pour guider l'air depuis l'entrée d'air 10 vers un projecteur respectif.

Les conduits supplémentaires d'amenée d'air 21 sont par exemple séparés du conduit amont d'entrée d'air 8. Ils sont par exemple formés par une paroi reliée en coin à la paroi du conduit amont d'entrée d'air 8. Les conduits supplémentaires d'amenée d'air 21 sont ainsi en partie formés dans le conduit amont d'entrée d'air 8 et dans le cadre porteur 6. Les conduits supplémentaires d'amenée d'air 21 guident ainsi une même portion du flux d'air vers les projecteurs indépendamment de l'inclinaison des volets.

Le guide d'air comprenant le conduit principal aval 7, les conduits amont d'entrée d'air 8, 9, et le cas échéant, le cadre porteur 6, le support d'échangeur 20, les conduits supplémentaires d'amenée d'air 17 ; 21 et les supports de projecteurs 23, est réalisé en une seule pièce. On comprend que les guides d'air ainsi réalisés sont moins coûteux à fabriquer, plus simples à assembler et présentent une meilleure étanchéité que les canaux guides d'air de l'état de la technique.

## Revendications

1. Guide d'ait (1; 1'; 1"; 1‴) pour véhicule automobile comportant au moins un conduit principal aval (7) destiné à être disposé devant un dispositif d'échange thermique (5) du véhicule automobile (2) et au moins un conduit amont d'entrée d'air (8, 9) destiné à être raccordé à une entrée d'air (10, 11), le au moins un conduit amont d'entrée d'air (8, 9) étant raccordé au conduit principal aval (7) pour guider l'air de l'entrée d'air (10, 11) vers le dispositif d'échange thermique (5) **caractérisé en ce que** le guide d'air est réalisé en une seule pièce, le guide comportant au moins un conduit supplémentaire d'amenée d'air (17 ; 21) destiné à être raccordé à une entrée d'air (10) du véhicule automobile (2), pour guider l'air depuis l'entrée d'air (10) vers un dispositif additionnel du véhicule automobile (2), **en ce que** le au moins un conduit supplémentaire d'amenée d'air (21) est séparé du conduit amont d'entrée d'air (8) et **en ce que** le au moins un conduit supplémentaire d'amenée d'air (17) communique avec le conduit amont d'entrée d'air (8), en amont d'un support de volets (18) du guide d'air.

2. Guide d'air selon la revendication précédente, **caractérisé en ce que** le au moins un conduit amont d'entrée d'air (8, 9) est réalisé en matériau flexible.

3. Guide d'air selon l'une des revendications précédentes **caractérisé en ce que** le conduit principal aval (7) est réalisé en matériau plus rigide que le au moins un conduit amont d'entrée d'air (8, 9).

4. Guide d'air selon l'une des revendications 2 ou 3, **caractérisé en ce qu'**il est obtenu par bi-injection.

5. Guide d'air selon l'une des revendications précédentes, **caractérisé en ce que** ledit au moins conduit amont d'entrée d'air (8,9) présente une forme de manchon et une forme générale évasée vers l'avant, s'agrandissant du côté destiné à être raccordé aux entrées d'air (10,11).

6. Guide d'air selon l'une des revendications précédentes, **caractérisée en ce que** le au moins un conduit amont d'entrée d'air (8, 9) s'étend dans une direction sensiblement perpendiculaire à un plan défini par une ouverture arrière du conduit principal aval (7) destinée à être raccordée au dispositif d'échange thermique (5).

7. Guide d'air selon l'une des revendications précédentes, **caractérisé en ce qu'**il comporte deux conduits amont d'entrée d'air (8, 9) superposés destinés à être raccordés d'une part, à une entrée d'air (10, 11) respective du véhicule automobile (2) et d' autre part, au conduit principal aval (7) pour guider l'air depuis l'entrée d'air (10, 11) vers le dispositif d'échange thermique (5) en formant un logement transversal (15) entre les conduits amont d'entrée d'air (8, 9) pour recevoir une poutre de protection (16) du véhicule automobile (2).

8. Guide d'air selon l'une des revendications précédentes, **caractérisé en ce qu'**il comporte deux conduits supplémentaires d'amenée d'air (17 ; 21) ménagés de part et d'autre d'un conduit amont d'entrée d'air (8), lesdits conduits supplémentaires d'amenée d'air (17 ; 21) étant destinés à déboucher au niveau d'un projecteur respectif du véhicule automobile (2).

9. Guide d'air selon l'une des revendications précédentes, **caractérisé en ce qu'**il comporte un cadre porteur (6) dans lequel est ménagé le au moins un conduit principal aval (7), le cadre porteur (6) comprenant un support d'échangeur (20) configuré pour maintenir le dispositif d'échange thermique (5) du véhicule automobile (2).

10. Guide d'air selon l'une des revendications précédentes, **caractérisé en ce qu'**il comporte un cadre porteur (6) dans lequel est ménagé le au moins un conduit principal aval (7), le cadre porteur (6) comprenant deux supports de projecteurs (23) agencés latéralement de part et d'autre du au moins un conduit principal aval (7).

11. Module de guide d'air **caractérisé en ce qu'**il comporte un guide d'air (1; 1' ; 1" ; 1‴) selon l'une des revendications précédentes et au moins un panneau de volets (19) monté dans le guide d'air.

## Patentansprüche

1. Luftführung (1; 1'; 1"; 1‴) für ein Kraftfahrzeug, aufweisend wenigstens eine stromabwärtige Hauptleitung (7), die dazu bestimmt ist, vor einer Wärmetauschvorrichtung (5) des Kraftfahrzeugs (2) angeordnet zu sein, und wenigstens eine stromaufwärtige Lufteinlassleitung (8, 9), die dazu bestimmt ist, an einen Lufteinlass (10, 11) angeschlossen zu sein, wobei die wenigstens eine stromaufwärtige Lufteinlassleitung (8, 9) an die stromabwärtige Hauptleitung (7) angeschlossen ist, um die Luft vom Lufteinlass (10, 11) zur Wärmetauschvorrichtung (5) zu führen, **dadurch gekennzeichnet, dass** die Luftführung einstückig ausgebildet ist, wobei die Führung wenigstens eine zusätzliche Luftzuleitung (17; 21) aufweist, die dazu bestimmt ist, an einen Lufteinlass (10) des Kraftfahrzeugs (2) angeschlossen zu sein, um die Luft vom Lufteinlass (10) zu einer zusätzlichen Vorrichtung des Kraftfahrzeugs (2) zu führen, dadurch, dass die wenigstens eine zusätzliche Luftzuleitung (21) von der stromaufwärtigen Lufteinlassleitung (8) getrennt ist, und dadurch, dass die wenigstens eine zusätzliche Luftzuleitung (17) mit der stromaufwärtigen Lufteinlassleitung (8) stromauf eines Klappenhalters (18) der Luftführung in Verbindung steht.

2. Luftführung nach dem vorhergehenden Anspruch, **dadurch gekennzeichnet, dass** die wenigstens eine stromaufwärtige Lufteinlassleitung (8, 9) aus flexiblem Material hergestellt ist.

3. Luftführung nach einem der vorhergehenden Ansprüche, **dadurch gekennzeichnet, dass** die stromabwärtige Hauptleitung (7) aus einem steiferen Material als die wenigstens eine stromaufwärtige Lufteinlassleitung (8, 9) hergestellt ist.

4. Luftführung nach einem der Ansprüche 2 oder 3, **dadurch gekennzeichnet, dass** sie durch Zweikomponentenspritzguss hergestellt ist.

5. Luftführung nach einem der vorhergehenden Ansprüche, **dadurch gekennzeichnet, dass** die wenigstens eine stromaufwärtige Lufteinlassleitung (8, 9) eine Hülsenform und eine nach vorne aufgeweitete allgemeine Form aufweist, die auf der Seite größer wird, die zum Anschluss an die Lufteinlässe (10, 11) bestimmt ist.

6. Lufteinlass nach einem der vorhergehenden Ansprüche, **dadurch gekennzeichnet, dass** sich die wenigstens eine stromaufwärtige Lufteinlassleitung (8, 9) in einer Richtung im Wesentlichen senkrecht zu einer Ebene erstreckt, die von einer hinteren Öffnung der stromabwärtigen Hauptleitung (7) definiert ist, die zum Anschluss an die Wärmetauschvorrichtung (5) bestimmt ist.

7. Luftführung nach einem der vorhergehenden Ansprüche, **dadurch gekennzeichnet, dass** sie zwei übereinander gelagerte stromaufwärtige Lufteinlassleitungen (8, 9) aufweist, die dazu bestimmt sind, einerseits an einen jeweiligen Lufteinlass (10, 11) des Kraftfahrzeugs (2) und andererseits den die stromabwärtige Hauptleitung (7) angeschlossen zu sein, um die Luft vom Lufteinlass (10, 11) zur Wärmetauschvorrichtung (5) zu führen, wobei eine Queraufnahme (15) zwischen den stromaufwärtigen Lufteinlassleitungen (8, 9) gebildet wird, um einen Schutzbalken (16) des Kraftfahrzeugs (2) aufzunehmen.

8. Luftführung nach einem der vorhergehenden Ansprüche, **dadurch gekennzeichnet, dass** sie zwei zusätzliche Luftzuleitungen (17; 21) aufweist, die beiderseits einer stromaufwärtigen Lufteinlassleitung (8) angeordnet sind, wobei die zusätzlichen Luftzuleitungen (17; 21) dazu bestimmt sind, im Bereich eines jeweiligen Scheinwerfers des Kraftfahrzeugs (2) zu münden.

9. Luftführung nach einem der vorhergehenden Ansprüche, **dadurch gekennzeichnet, dass** sie einen Tragrahmen (6) aufweist, in dem die wenigstens eine stromabwärtige Hauptleitung (7) angeordnet ist, wobei der Tragrahmen (6) einen Tauscherhalter (20) umfasst, der dazu ausgebildet ist, die Wärmetauschvorrichtung (5) des Kraftfahrzeugs (2) zu halten.

10. Luftführung nach einem der vorhergehenden Ansprüche, **dadurch gekennzeichnet, dass** sie einen Tragrahmen (6) aufweist, in dem die wenigstens eine stromabwärtige Hauptleitung (7) angeordnet ist, wobei der Tragrahmen (6) zwei Scheinwerferhalter (23) umfasst, die seitlich auf beiden Seiten der wenigstens einen stromabwärtigen Hauptleitung (7) angeordnet sind.

11. Luftführungsmodul, **dadurch gekennzeichnet, dass** es eine Luftführung (1; 1'; 1"; 1‴) nach einem der vorhergehenden Ansprüche und wenigstens eine Tafel aus Klappen (19), die in der Luftführung angebracht ist, aufweist.

## Claims

1. Air guide (1; 1'; 1"; 1‴) for a motor vehicle comprising at least one downstream main duct (7) intended to be arranged in front of a heat exchange device (5) of the motor vehicle (2) and at least one air inlet upstream duct (8, 9) intended to be connected to an air inlet (10, 11), the at least one air inlet upstream duct (8, 9) being connected to the downstream main duct (7) in order to guide the air from the air inlet (10, 11) to the heat exchange device (5), **characterized in that** the air guide is made in one piece, the guide comprising at least one supplementary air supply duct (17; 21) intended to be connected to an air inlet (10) of the motor vehicle (2) in order to guide the air from the air inlet (10) to an additional device of the motor vehicle (2), **in that** the at least one supplementary air supply duct (21) is separated from the air inlet upstream duct (8), and **in that** the at least one supplementary air supply duct (17) communicates with the air inlet upstream duct (8), upstream of a flap support (18) of the air guide.

2. Air guide according to the preceding claim, **characterized in that** the at least one air inlet upstream duct (8, 9) is made of flexible material.

3. Air guide according to either of the preceding claims, **characterized in that** the downstream main duct (7) is made of a more rigid material than the at least one air inlet upstream duct (8, 9).

4. Air guide according to either of Claims 2 and 3, **characterized in that** it is obtained by two-shot injection moulding.

5. Air guide according to one of the preceding claims, **characterized in that** said at least one air inlet upstream duct (8, 9) has a sleeve shape and a generally flared shape towards the front, increasing on the side intended to be connected to the air inlets (10, 11).

6. Air guide according to one of the preceding claims, **characterized in that** the at least one air inlet upstream duct (8, 9) extends in a direction substantially perpendicular to a plane defined by a rear opening in the downstream main duct (7) intended to be connected to the heat exchange device (5) .

7. Air guide according to one of the preceding claims, **characterized in that** it comprises two superposed air inlet upstream ducts (8, 9) intended to be connected, on the one hand, to a respective air inlet (10, 11) of the motor vehicle (2) and, on the other hand, to the downstream main duct (7) in order to guide the air from the air inlet (10, 11) to the heat exchange device (5) by forming a transverse housing (15) between the air inlet upstream ducts (8, 9) in order to receive a protection beam (16) of the motor vehicle (2).

8. Air guide according to one of the preceding claims, **characterized in that** it comprises two supplementary air supply ducts (17; 21) formed on either side of an air inlet upstream duct (8), said supplementary air supply ducts (17, 21) being intended to open at a respective headlamp of the motor vehicle (2).

9. Air guide according to one of the preceding claims, **characterized in that** it comprises a supporting frame (6) in which the at least one downstream main duct (7) is formed, the supporting frame (6) comprising an exchanger support (20) configured to hold the heat exchange device (5) of the motor vehicle (2).

10. Air guide according to one of the preceding claims, **characterized in that** it comprises a supporting frame (6) in which the at least one downstream main duct (7) is formed, the supporting frame (6) comprising two headlamp supports (23) arranged laterally on either side of the at least one downstream main duct (7).

11. Air guide module, **characterized in that** it comprises an air guide (1; 1'; 1"; 1‴) according to one of the preceding claims and at least one flap panel (19) mounted in the air guide.
